(19) Europäisches Patentamt
European Patent Office
Office européen des brevets

(11) **EP 2 458 702 B1**

(12) **EUROPÄISCHE PATENTSCHRIFT**

(45) Veröffentlichungstag und Bekanntmachung des Hinweises auf die Patenterteilung:
**02.01.2019 Patentblatt 2019/01**

(51) Int Cl.:
***H02H 9/00*** *(2006.01)*      ***H02H 7/12*** *(2006.01)*

(21) Anmeldenummer: **10192831.5**

(22) Anmeldetag: **29.11.2010**

(54) **Eigensicherer Gleichspannungswandler**

Intrinsically safe d.c. converter

Convertisseur de courant continu de sécurité intrinsèque

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**30.05.2012 Patentblatt 2012/22**

(73) Patentinhaber: **Siemens Aktiengesellschaft 80333 München (DE)**

(72) Erfinder: **Haritounian, Sevan 92224, Amberg (DE)**

(74) Vertreter: **Maier, Daniel Oliver et al Siemens AG Postfach 22 16 34 80506 München (DE)**

(56) Entgegenhaltungen:
**EP-A1- 0 082 105      EP-A1- 0 638 985 DE-A1-102006 006 578      US-A- 5 297 014**

**Beschreibung**

Die Erfindung betrifft einen Gleichspannungswandler, welcher eine Versorgungsspannung in eine Ausgangsspannung umwandelt und dabei einen Eingangsstrom aufnimmt, mit einer Leistungsbegrenzungsschaltung, welche einen Komparator umfasst, dem eine zu dem Eingangsstrom proportionale Spannung zugeführt ist und dessen Ausgang mit einem Schaltkreis zur Abschaltung des Gleichspannungswandlers
verbunden ist.

Ein Gleichspannungswandler, auch DC/DC-Wandler genannt, wandelt eine eingangsseitige Versorgungsspannung in eine zumeist konstante ausgangsseitige Gleichspannung um. Zur Umsetzung des Wandlerprinzips sind zahlreiche Topologien bekannt. Dabei kann eine von einem gesteuerten Schalter angesteuerte Induktivität mit der Ausgangsseite in galvanischer Verbindung stehen. Meistens jedoch werden Übertrager verwendet, wobei der Strom durch eine Primärwicklung mittels eines gesteuerten Schalters getaktet wird. Die Ansteuerschaltung enthält beispielsweise einen Pulsbreitenmodulator (PWM), dessen Tastverhältnis zum Zwecke der Regelung, beispielsweise auf konstante Ausgangsspannung, geändert werden kann.

Leistungsbegrenzungsschaltungen kommen zur Anwendung, um bei Überlasten bzw. im Fehlerfall ein sicheres Abschalten des Gleichspannungswandlers herbeizuführen. Gegebenenfalls ist aus Sicht der Eigensicherheit nach der Norm DIN EN 60079-11 die maximal mögliche Verlustleistung von DC/DC-Wandlern zu beachten. Dieser Teil von IEC 60079 legt die Bestimmungen für die Konstruktion und Prüfung eigensicherer Betriebsmittel, die für die Verwendung in gasexplosionsgefährdeten Bereichen bestimmt sind, sowie für zugehörige Betriebsmittel fest, die für den Anschluss an eigensichere Stromkreise, die in solche Bereiche hineinführen, vorgesehen sind.

Bekannt sind Leistungsbegrenzungsschaltungen, welche den Strom überwachen, der von dem zu schützenden Gleichspannungswandler aufgenommen wird. Eine solche Schaltung bewirkt eine Strombegrenzung, indem bei Erreichung eines maximal zulässigen Stromes die Abschaltung des Gleichspannungswandlers herbeigeführt wird. Mittels einer für den Gleichspannungswandler festgelegten maximalen Versorgungsspannung ergibt sich somit auch die Begrenzung auf einen maximal zulässigen Leistungseintrag. Die maximal mögliche Versorgungsspannung wird nach dem Stand der Technik deshalb zur Beurteilung der Leistungsaufnahme bzw. Verlustleistung herangezogen, weil in der Regel keine Messung der Versorgungsspannung erfolgt.

Konkret wird an einen Referenzeingang eines Komparators eine konstante Spannung angelegt. Mittels des Komparators erfolgt ein laufender Vergleich mit einem Spannungsabfall an Strommesswiderständen, durch die der Eingangsstrom des Gleichspannungswandlers fließt. Sobald der Spannungsabfall die Konstantspannung übersteigt, wird der Gleichspannungswandler abgeschaltet.

Aus der Schrift EP 0 638 985 A1 ist beispielsweise ein derartiger Gleichspannungswandler bekannt. Bei diesem ist eine Begrenzung des im primärseitigen Hauptstromkreis fließenden Pulsstromes vorgesehen. Dazu werden einerseits mittels einer ersten Anordnung zur Strombegrenzung Einschaltimpulse verkürzt und andererseits mittels einer zweiten Anordnung zur Strombegrenzung Einschaltimpulse unterdrückt. Die Anordnungen zur Strombegrenzung weisen dabei Komparatoren auf, wobei die an den jeweiligen nichtinvertierenden Eingängen anliegenden Spannungen mit einer Bezugsspannung verglichen werden, für welche eine Konstantspannung als Quelle dient.

Aus der Schrift US 5,297,014 ist ein Gleichspannungswandler bekannt, bei welchem ebenfalls Überstrombegrenzung zur Vermeidung von Überhitzung vorgesehen ist. Dazu weist der Gleichspannungswandler eine Anordnung mit einem Komparator auf, an dessen nichtinvertierenden Eingang eine dem Eingangsstrom proportionale Spannung anliegt. Diese Spannung wird mit einem Schwellwert verglichen und der Gleichspannungswandler abgeschaltet, wenn dieser überschritten wird.

Der Erfindung liegt die Aufgabe zugrunde, für einen Gleichspannungswandler der eingangs genannten Art eine Verbesserung gegenüber dem Stand der Technik anzugeben. Erfindungsgemäß wird diese Aufgabe gelöst durch einen Gleichspannungswandler mit einer Leistungsbegrenzung gemäß Anspruch 1. In Unteransprüchen sind vorteilhafte Ausführungsformen angegeben.

Dabei liegt an einem Referenzeingang des Komparators eine Referenzspannung an, welche bei steigender Versorgungsspannung sinkt und welche bei sinkender Versorgungsspannung steigt. Dadurch bleibt die maximal mögliche Leistungsaufnahme eines Gleichspannungswandlers auch bei einer schwankenden Versorgungsspannung konstant. Die Schaltung macht sich die Tatsache zunutze, dass Gleichspannungswandler bei höherer Versorgungsspannung eine niedrigere Stromaufnahme aufweisen. Die nicht konstante Referenzspannung bewirkt, dass bei einem Absinken der Versorgungsspannung der maximal zulässige Eingangsstrom ansteigt. Umgekehrt wird der maximal zulässige Eingangsstrom auf einen niedrigen Wert begrenzt, wenn die eingangsseitige Versorgungsspannung einen Maximalwert erreicht.

Gegenüber bekannten Leistungsbegrenzungen steigt somit die übertragbare Leistung. Oder es ergibt sich bei gleicher übertragbarer Leistung eine deutlich geringere maximal zulässige Leistungsaufnahme, wodurch die Baugröße des Wandlers reduzierbar ist, ohne die Abschaltsicherheit zu beeinträchtigen.

Insbesondere für einen Gleichspannungswandler, welcher als eigensicheres Gerät ausgebildet ist, stellt die erfindungsgemäße Maßnahme einen Vorteil dar. Wie bereits dargelegt sieht eine entsprechende Norm für eigensichere Geräte maximal mögliche Verlustleistungen vor. Dabei kann beispielsweise ein bestimmtes Schutzniveau (z.B. "ib") vorgegeben sein.

Durch die variable Referenzspannung wird berücksichtigt, dass bei einem Gleichspannungswandler die maximale Stromaufnahme nicht bei einem Maximum der Versorgungsspannung auftritt. Die Begrenzung des Stromes führt somit weiterhin zu einer verlässlichen Begrenzung einer zu beschränkenden Verlustleistung, auch wenn für die Beurteilung der Leistungsaufnahme bzw. Verlustleistung nicht die maximal mögliche Versorgungsspannung herangezogen wird. Gegenüber bekannten Leistungsbegrenzungen reduziert sich die maximal zulässige Verlustleistung bei gleichbleibender übertragbarer Leistung. Der neue Wandler weist somit bei unverändertem Schutzniveau der Eigensicherheit ein reduziertes Volumen auf oder die übertragbare Leistung erhöht sich bei gleichbleibendem Volumen.

Günstigerweise wird ein eigensicherer Gleichspannungswandler mit einem geeigneten Isolationsmaterial vergossen, beispielsweise mittels eines Kunstharzes. Damit ist ein zusätzlicher Schutz gegen Funkenbildung infolge eines überhitzten bzw. überlasteten Bauteils des Gleichspannungswandlers gegeben.

Eine vorteilhafte Ausführungsvariante sieht vor, dass die am Referenzeingang des Komparators anliegende Referenzspannung als Ausgangssignal eines Differenzverstärkers gebildet ist und dass dem Differenzverstärker als erstes Eingangssignal eine zu der Versorgungsspannung proportionale Spannung und als zweites Eingangssignal ein konstante Spannung zugeführt sind. In einfacher Weise ist das erste Eingangssignal mittels eines Spannungsteilers aus der Versorgungsspannung abgeleitet.

Bei einer anderen vorteilhaften Ausführungsform liegen an der Versorgungsspannung ein erster Spannungsteiler und ein zweiter Spannungsteiler an. Der Ausgang des ersten Spannungsteilers ist dabei einerseits mit dem Referenzeingang des Komparators verbunden und andererseits über einen Transistor mit einem zusätzlichen Widerstand an den Ausgang des zweiten Spannungsteilers geschaltet. Mit dem Transistor wird ein Stromfluss gesteuert, welcher vom Spannungspotenzial am Ausgang des ersten Spannungsteilers zu einem Bezugspotenzial abfließt. Mit steigender Versorgungsspannung steigt auch dieser gesteuerte Stromfluss an, sodass das Spannungspotenzial am Ausgang des ersten Spannungsteilers und somit die Referenzspannung abfällt.

Die Erfindung bezieht sich auf einen Gleichspannungswandler gemäß Anspruch 1. Vorteilhafte Ausführungsformen sind in den abhängigen Ansprüchen definiert.

Die Erfindung wird nachfolgend in beispielhafter Weise unter Bezugnahme auf die beigefügten Figuren erläutert. Es zeigen in schematischer Darstellung:

Fig. 1    Blockdarstellung einer ersten Ausführungsform

Fig. 2    Spannungsverläufe über der Zeit

Fig. 3    Blockdarstellung einer zweiten Ausführungsform

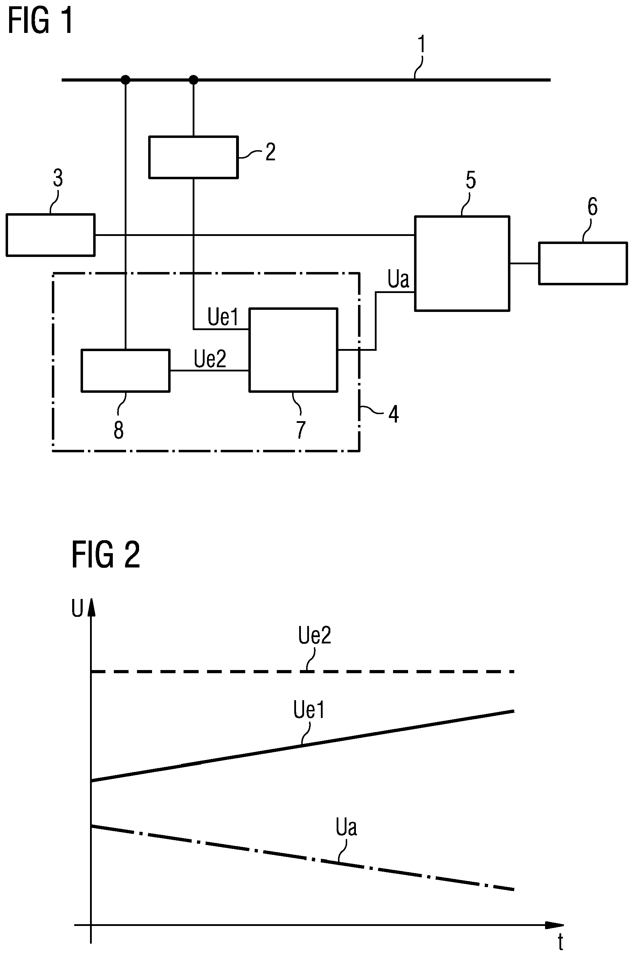

Eine Schaltung 4 zur Bildung eines von der Versorgungsspannung 1 abhängigen Referenzsignals Ua ist direkt und über einen Spannungsteiler 2 an die Versorgungsspannung 1 geschaltet. Dabei ist in einer ersten Ausführungsform die Spannung Ue1 am Ausgang des Spannungsteilers 2 als erstes Eingangssignal einem Differenzverstärker 7 zugeführt (Fig. 1). An einem zweiten Eingang des Differenzverstärkers 7 liegt als zweites Eingangssignal eine konstante Spannung Ue2 an. Diese ist mittels einer geeigneten Schaltung aus der Versorgungsspannung 1 abgeleitet, beispielsweise mittels einer Zenerdiode.

Das Ausgangssignal des Differenzverstärkers 7 ist dem Referenzeingang eines Komparators 5 als Referenzspannung Ua zugeführt. Ein zweiter Eingang des Komparators 5 ist mit dem Ausgang einer Stromerfassung 3 verbunden. Diese Stromerfassung 3 überwacht den Eingangsstrom, welcher von dem Gleichstromwandler aufgenommen wird. Beispielsweise liefert die Stromerfassung 3 den Spannungsabfall durch Strommesswiderstände, durch die der Eingangsstrom des Gleichspannungswandlers fließt.

Der Komparator 5 vergleicht laufend die beiden Spannungen an den beiden Eingängen. Sobald die von der Stromerfassung 3 gelieferte Messspannung die Referenzspannung Ua erreicht, kippt der Ausgang des Komparators und ein nachgeschalteter Schaltkreis 6 zur Abschaltung des Gleichspannungswandlers wird aktiviert.

In Fig. 2 sind die Eingangsspannungen Ue1, Ue2 und die Referenzspannung Ua am Ausgang des Differenzverstärkers 7 über der Zeit t dargestellt. Ohne Verstärkung gilt die Formel:

$$\mathtt{Ua\ =\ Ue2\ -\ Ue1\ (Verst\ddot{a}rkung\ =\ 1)}$$

Die erste Eingangsgröße ist die zur Versorgungsspannung 1 proportionale Spannung Ue1 und die zweite Eingangsgröße ist die konstante Spannung Ue2. Eine ansteigende erste Spannung Ue1 bewirkt eine abfallende Referenzspannung Ua. Die als Ausgangssignal des Differenzverstärkers 7 vorliegende Referenzspannung Ua sinkt also bei steigender Versorgungsspannung 1 und steigt bei sinkender Versorgungs spannung.

Die erste Spannung Ue1 am Ausgang des Spannungsteilers 2 und die konstante Spannung Ue2 sind in der Weise vorzugeben, dass die am Ausgang des Differenzverstärkers 7 anliegende Referenzspannung Ua für den Vergleich mit der Messspannung aus der Stromerfassung 3 geeignet ist. Die von der Versorgungsspannung 1 abhängige Referenzspannung Ua bestimmt den maximal zulässigen Eingangsstrom des Gleichstromwandlers. Dieser maximal zulässige Eingangsstrom muss zum Zeitpunkt seines Erreichens mit der dabei tatsächlich auftretenden Versorgungsspannung 1 eine Leistungsaufnahme ergeben, welche mit einer ausreichenden Sicherheit unterhalb der maximal zulässigen Leistungsaufnahme liegt. Die gewählte Sicherheit hängt beispielsweise von einem festgelegten Schutzniveau für eigensichere Geräte ab.

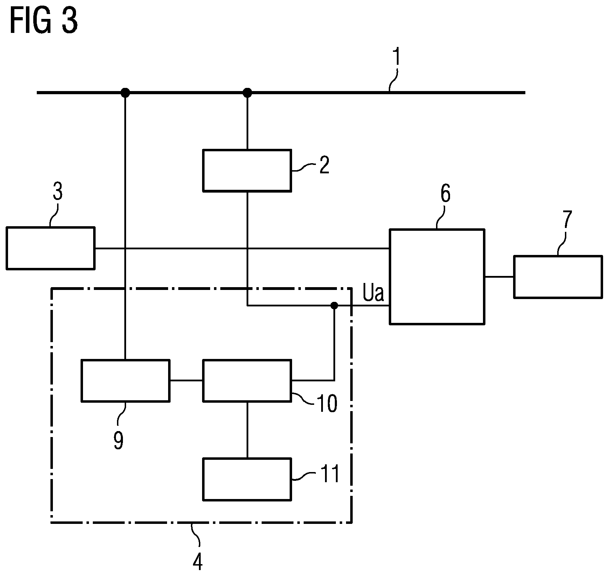

In einer zweiten Ausführungsform, in Fig. 3 dargestellt, beeinflusst ein mit dem Transistor 10 gesteuerter Strom das am Ausgang eines ersten Spannungsteilers 2 anliegende Spannungspotenzial. Über einen zweiten Spannungsteiler 9 steht eine zur Versorgungsspannung 1 proportionale Steuerspannung des Transistors 10 zur Verfügung. Steigt die Versorgungsspannung 1 an, steigt auch die Steuerspannung, wodurch der Stromfluss durch den Transistor 10 ansteigt und das Spannungspotenzial am Ausgang des ersten Spannungsteilers 2 abfällt. Dieses Spannungspotenzial 2 bestimmt dabei die Referenzspannung Ua am Referenzeingang des Komparators 6. Bei steigender Versorgungsspannung 1 sinkt demnach die Referenzspannung Ua. Umgekehrt steigt die Referenzspannung Ua an, sobald die Versorgungsspannung 1 sinkt.

Der zweite Eingang des Komparators 6 ist wieder mit dem Ausgang der Stromerfassung 3 verbunden. Sobald die ausgegebene Messspannung den Wert der Referenzspannung Ua errecht, kippt das Ausgangssignal des Komparators 6 und ein nachfolgender Schaltkreis 7 zur Abschaltung des Gleichspannungswandlers wird aktiviert.

Auch die Vorgabe einer Temperaturklasse (z.B. T4 mit einer maximalen Oberflächentemperatur von 135°C gemäß IEC 60079-0, Kap. 5.3.2.2) bietet einen Schutz des Gleichspannungswandlers. Ohne eine Leistungsbegrenzung würden gegebenenfalls integrierte Temperatursensoren eine Übertemperatur verhindert, allerdings reagieren solche Sensoren verzögert auf punktförmige Übertemperaturen einzelner Bauteile wie Schalttransistoren. Die Leistungsbegrenzung der vorliegenden Erfindung reagiert dagegen ohne Zeitverzögerung, sobald der Eingangsstrom den vorgegeben von der Versorgungsspannung 1 abhängigen Grenzwert (durch die Referenzspannung bestimmt) erreicht.

Eine Übertemperatur z.B. der Schalttransistoren wird durch die vorliegende Leistungsbegrenzung besser beherrscht als durch die Betrachtung des Eingangsstromes bei einer maximal möglichen Versorgungsspannung nach dem Stand der Technik. Mit der erfindungsgemäßen Leistungsbegrenzung wir die tatsächliche Eingangsleistung als Produkt aus Spannung und Strom berücksichtigt. Dies nutzt die Funktionsweise von Gleichspannungswandlern, weil hier die Versorgungsspannung 1 unmittelbar den Eingangsstrom beeinflusst. Je höher die Versorgungsspannung 1, umso niedriger ist der Eingangsstrom bei gleicher Eingangsleistung (=Leistungsaufnahme).

Bei Hochsetzstellern wird neben der in den Halbleiterbauelementen umgesetzten Verlustleistung auch die maximale Verlustleistung in den Widerständen, welche sich nach einer Ausgangssicherung des Hochsetzstellers befinden, sinnvoll begrenzt. Bei einem beispielhaften Schutzniveau für Eigensicherheit nach "ib" mit einer zweifachen Auslegung der vorliegenden elektronischen Leistungsbegrenzung sind diese Widerstände ebenfalls vor Übertemperatur geschützt.

Dem gegenüber würde eine konstante Begrenzung des Stromes durch die Sicherung (z.B. laut IEC 60079-11. Kap. 7.3 das 1,7-Fache des Nennstromes) unter Heranziehung der maximalen Ausgangsspannung größere Bauformen der Widerstände erfordern.

Günstig ist es, den Wandler zu vergießen, wodurch ein zusätzlicher Schutz gegen Funkenzündung durch überhitzte bzw. überlastete Bauteile gegeben ist. Grundsätzlich reicht jedoch die vorgestellte Leistungsbegrenzung aus, um Funkenzündung bzw. Überlastung von Bauteilen zu verhindern.

**Patentansprüche**

1.  Gleichspannungswandler, welcher eine Versorgungsspannung (1) in eine Ausgangsspannung umwandelt und dabei einen Eingangsstrom aufnimmt, mit einer Leistungsbegrenzungsschaltung, welche einen Komparator (5) umfasst, dem eine zu dem Eingangsstrom proportionale Spannung zugeführt ist und dessen Ausgang mit einem Schaltkreis (6) zur Abschaltung des Gleichspannungswandlers verbunden ist, **dadurch gekennzeichnet, dass** an einem Referenzeingang des Komparators (5) eine Referenzspannung (Ua) anliegt, welche bei steigender Versorgungsspannung (1) sinkt und welche bei sinkender Versorgungsspannung (1) steigt.

2.  Gleichspannungswandler nach Anspruch 1, **dadurch gekennzeichnet, dass** der Gleichspannungswandler als eigensicheres Gerät ausgebildet ist.

**3.** Gleichspannungswandler nach Anspruch 1 oder 2, **dadurch gekennzeichnet, dass** der Gleichspannungswandler mit einem geeigneten Isolationsmaterial vergossen ist.

**4.** Gleichspannungswandler nach einem der Ansprüche 1 bis 3, **dadurch gekennzeichnet, dass** die am Referenzeingang des Komparators (5) anliegende Referenzspannung (Ua) als Ausgangssignal eines Differenzverstärkers (7) gebildet ist und dass dem Differenzverstärker (7) als erstes Eingangssignal eine zu der Versorgungsspannung (1) proportionale Spannung (Ue1) und als zweites Eingangssignal ein konstante Spannung (Ue2) zugeführt sind.

**5.** Gleichspannungswandler nach Anspruch 4, **dadurch gekennzeichnet, dass** das erste Eingangssignal mittels eines Spannungsteilers (2) aus der Versorgungsspannung (1) abgeleitet ist.

**6.** Gleichspannungswandler nach einem der Ansprüche 1 bis 3, **dadurch gekennzeichnet, dass** an der Versorgungsspannung (1) ein erster Spannungsteiler (2) und ein zweiter Spannungsteiler (9) anliegen und dass der Ausgang des ersten Spannungsteilers (2) einerseits mit dem Referenzeingang des Komparators (5) verbunden ist und andererseits über einen Transistor (10) mit einem zusätzlichen Widerstand (11) an den Ausgang des zweiten Spannungsteilers (9) geschaltet ist.

**Claims**

**1.** DC converter, which converts a supply voltage (1) into an output voltage and in the process receives an input current, with a power limitation circuit, which comprises a comparator (5), to which a voltage proportional to the input current is supplied and the output of which is connected to a switching circuit (6) for switching off the DC converter, **characterised in that** a reference voltage (Ua) is applied to a reference input of the comparator (5), which decreases when the supply voltage (1) increases and which increases when the supply voltage (1) decreases.

**2.** DC converter according to claim 1, **characterised in that** the DC voltage converter is embodied as an intrinsically safe device.

**3.** DC converter according to claim 1 or 2, **characterised in that** the DC voltage converter is cast with a suitable insulating material.

**4.** DC converter according to one of claims 1 to 3, **characterised in that** the reference voltage (Ua) applied at the reference input of the comparator (5) is formed as an output signal of a differential amplifier (7) and that a voltage (Ue1) proportional to the supply voltage (1) and a constant voltage (Ue2) are fed to the differential amplifier (7) as a first input signal and as a second input signal in each instance.

**5.** DC converter according to claim 4, **characterised in that** the first input signal is derived from the supply voltage (1) by means of a voltage divider (2).

**6.** DC converter according to one of claims 1 to 3, **characterised in that** a first voltage divider (2) and a second voltage divider (9) are present at the supply voltage (1) and that the output of the first voltage divider (2) is connected on one side to the reference input of the comparator (5) and on the other side via a transistor (10) to an additional resistor (11) at the output of the second voltage divider (9).

**Revendications**

**1.** Convertisseur de courant continu, lequel convertit une tension d'alimentation (1) en une tension de sortie et reçoit ainsi un courant d'entrée, comprenant un circuit de limitation de puissance qui comprend un comparateur (5) qui reçoit une tension proportionnelle au courant d'entrée et dont la sortie est reliée à un circuit (6) pour mettre hors tension le convertisseur de courant continu, **caractérisé en ce qu'**une tension de référence (Ua) est présente sur une entrée de référence du comparateur (5), laquelle baisse lorsque la tension d'alimentation (1) augmente et laquelle augmente lorsque la tension d'alimentation (1) baisse.

**2.** Convertisseur de courant continu selon la revendication 1, **caractérisé en ce que** le convertisseur de courant continu est conçu en tant qu'appareil à sécurité intrinsèque.

**3.** Convertisseur de courant continu selon la revendication 1 ou 2, **caractérisé en ce que** le convertisseur de courant continu est coulé avec un matériau isolant approprié.

**4.** Convertisseur de courant continu selon l'une des revendications 1 à 3, **caractérisé en ce que** la tension de référence (Ua) présente à l'entrée de référence du comparateur (5) est formée en tant que signal de sortie d'un amplificateur différenciateur (7) et que sont envoyées à l'amplificateur différenciateur (7), une tension (Ue1) proportionnelle à la tension d'alimentation (1) en tant que premier signal d'entrée et une tension (Ue2) constante en tant que deuxième signal d'entrée.

**5.** Convertisseur de courant continu selon la revendication 4, **caractérisé en ce que** le premier signal d'entrée est dérivé de la tension d'alimentation (1) au moyen d'un diviseur de tension (2).

**6.** Convertisseur de courant continu selon l'une des revendications 1 à 3, **caractérisé en ce qu'**un premier diviseur de tension (2) et un deuxième diviseur de tension (9) sont placés sur la tension d'alimentation (1) et que la sortie du premier diviseur de tension (2) est reliée d'une part à l'entrée de référence du comparateur (5) et couplée d'autre part à la sortie du deuxième diviseur de tension (9) par un transistor (10) avec une résistance supplémentaire (11).

# FIG 1

# FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0638985 A1
- US 5297014 A